# EUROPÄISCHE PATENTSCHRIFT

(11) **EP 3 366 414 B1**
(45) Veröffentlichungstag und Bekanntmachung des Hinweises auf die Patenterteilung: **19.08.2020**
(21) Anmeldenummer: 18155258.9
(22) Anmeldetag: 06.02.2018
(51) Int. Cl.: B23K 31/12, G01N 25/16

(54) **VERFAHREN UND VORRICHTUNG ZUR PRÜFUNG VON FÜGEVERBINDUNGEN**
DEVICE AND METHOD FOR CHECKING JOINT CONNECTIONS
PROCÉDÉ ET DISPOSITIF DESTINÉS À LA VÉRIFICATION DE RACCORDS D'ASSEMBLAGE

(30) Priorität: 27.02.2017 DE 102017104047
(43) Veröffentlichungstag der Anmeldung: 29.08.2018
(73) Patentinhaber: Universität Kassel, 34125 Kassel (DE)
(72) Erfinder: Kryukov, Igor, 34121 Kassel (DE); Rebensdorf, Anatoli, 74196 Neuenstadt am Kocher (DE); Pukies, Christian, 37133 Friedland (DE); Böhm, Stefan, 38179 Schwülper (DE)
(74) Vertreter: Patentanwälte Walther Hinz Bayer PartGmbB

(56) Entgegenhaltungen:
- EP-A1- 2 853 336
- DE-A1-102010 018 980
- DE-A1-102011 076 631
- JP-A- 2000 039 308
- US-A1- 2008 123 079

## Beschreibung

Die Erfindung betrifft eine Fügevorrichtung zum Herstellen und Prüfen einer Fügeverbindung zwischen einem ersten Fügepartner und wenigstens einem zweiten Fügepartner gemäß dem Oberbegriff des Anspruchs 1 (siehe z.B. JP 2000/039308 A), wobei die Fügeverbindung mit der Fügevorrichtung hergestellt wird, und wobei ein Prüfmittel bereitgestellt wird, mit dem unter Nutzung einer Shearografie die hergestellte Fügeverbindung überprüft wird. Die Erfindung betrifft auch ein Verfahren zum Herstellen und Prüfen einer Fügeverbindung zwischen einem ersten Fügepartner und einem zweiten Fügepartner mit einer solchen Fügevorrichtung, siehe Anspruch 6.

### STAND DER TECHNIK

Beispielsweise ist aus der DE 10 2011 104 550 A1 eine Fügevorrichtung zur Ausführung eines Fügeverfahrens bekannt, mit der eine Fügeverbindung zwischen einem ersten Fügepartner und einem zweiten Fügepartner herstellbar ist, wobei das Fügeverfahren als Schweißverfahren ausgeführt wird. Weiterhin umfasst die Fügevorrichtung ein Prüfmittel, mit dem die Güte der hergestellten Fügeverbindung überprüft werden kann.

Die DE 10 2011 076 631 A1 offenbart ein Verfahren zum Prüfen einer Fügeverbindung zwischen einem ersten Fügepartner und einem zweiten Fügepartner, wobei mit einem Prüfmittel unter Nutzung der Shearografie die hergestellte Schweißverbindung überprüft wird. Die Fügeverbindung wird durch eine Schweißverbindung gebildet, die insbesondere mittels des sogenannten Rührreibschweißens erzeugt wird. Um die Shearografie auszuführen, wird auf die mit der Schweißverbindung gefügten Fügepartner eine Zugkraft aufgebracht, sodass mit einer eingeleiteten Deformation eine Messung auf Basis der Shearografie erfolgen kann. Weist die Fügeverbindung in der Fügestelle einen Fehler auf, so weicht die messbare Deformation von einer Soll-Deformation ab, und aus der gemessenen Abweichung kann eine Aussage abgeleitet werden, ob die Fügeverbindung fehlerbehaftet ist oder nicht.

Die DE 10 2010 018 980 A1 offenbart ein Verfahren und Vorrichtung zur Messung von Verbindungseigenschaften eines Werkstoffverbundes aus flächig mittels Kleben verbundenen Verbundwerkstoffen. Mittels eines Lasers wird der Werkstoffverbund erwärmt und so eine Verformung bewirkt. Zur Messung der Verbindungseigenschaften wird mittels Shearografieverfahren ein Bild der verformten und ein Bild der unverformten Oberfläche des Werkstoffverbundes aufgenommen.

Die US 2008 123 079 A1 offenbart ein Verfahren und Vorrichtung zur Messung von Innenspannungen im Bereich von einer Schweißnaht zwischen zwei zusammengefügten Bauteilen. Dabei wird der Bereich der Schweißnaht mittels eines Lasers erwärmt um eine Deformation zu bewirken. Um die Innenspannung zu bestimmen werden mittels Interferometrie aufgenommene Bilder vom deformierten Bereich herangezogen.

Bei einem solchen Verfahren liegt die Schwierigkeit jedoch in der hohen Steifigkeit der Fügepartner, wenn diese aus metallischen Werkstoffen hergestellt sind. Folglich müssen sehr kleine Deformationen gemessen werden, was die Messung durch das Prüfmittel erschwert. Ein weiterer Nachteil liegt darin, dass nicht jede hergestellte Schweißverbindung einer mechanischen Kraft ausgesetzt werden kann, da die Deformation abhängig von der Schweißumgebung nicht grundsätzlich in die Fügepartner eingeleitet werden kann, zudem erfordert ein derartiges Prüfverfahren unter Nutzung von eingeleiteten mechanischen Spannungen in die Fügepartner einen großen Zeitaufwand und zusätzliche Mittel zur Aufbringung der Deformationskraft.

Insbesondere bei punktförmigen Fügeverbindungen, beispielsweise beim Widerstands-Punktschweißen, wird häufig eine große Anzahl von Fügepunkten in einer Abfolge zwischen zwei Fügepartnern hergestellt, beispielsweise Schweißpunkte, Clinchpunkte, Nietverbindungen oder Schraubverbindungen in der Karosseriefertigung von Fahrzeugen. Beispielsweise erfolgt das Punktschweißen mittels Elektroden, die in einer Schweißzange aufgenommen sind. Würde nach Herstellung eines jeden Schweißpunktes zur Qualitätssicherung eine mechanische Spannung in die Fügepartner eingeleitet werden müssen, so würden sich die Prozesszeiten zur Herstellung der Vielzahl der Punktschweißungen erheblich vergrößern, wodurch ein derartiges Füge-Prüfverfahren unwirtschaftlich wird.

Ein Verfahren bei dem mittels Erwärmung durch einen Laser im Bereich jeder gefügten Verbindung eine Deformation erzeugt wird um die Verbindungseigenschaften zu bestimmen würde ebenfalls zu langen Prozesszeiten und hohen Betriebskosten führen und unwirtschaftlich sein.

### OFFENBARUNG DER ERFINDUNG

Aufgabe der Erfindung ist die Weiterbildung eines Fügeverfahrens mittels einer Fügevorrichtung sowie die Weiterbildung einer solchen Fügevorrichtung, mit dem bzw. der eine vereinfachte Überprüfung der Fügeverbindung mit kurzen Prüfzeiten möglich wird. Insbesondere soll das Verfahren in einem laufenden Produktionsprozess implementierbar sein, sodass sehr kurze Prüfzeiten zur Überprüfung der Güte der Fügeverbindung erreicht werden sollen.

Eine Vorrichtung gemäß der Erfindung ist im Anspruch 1 definiert. Ein Verfahren gemäß der Erfindung, unter Verwendung einer solchen Vorrichtung, ist im Anspruch 6 definiert. Vorteilhafte Weiterbildungen der Erfindung sind in den abhängigen Ansprüchen angegeben.

Das erfindungsgemäße Verfahren schlägt wenigstens die folgenden Schritte vor: Herstellen der Fügeverbindung mit der Fügevorrichtung unter Erwärmung der Fügepartner und Messen einer thermisch verursachten Deformation der Fügepartner mit dem Prüfmittel unter Nutzung der Shearografie.

Gemäß einem ersten Aspekt der Erfindung kann die Fügeverbindung unter Erwärmung der Fügepartner in der Fügestelle mit der Fügevorrichtung hergestellt werden, und während oder nach dem Herstellen der Fügeverbindung wird unter Ausnutzung einer eingebrachten Wärme und einer damit induzierten Deformation wenigstens eines der Fügepartner die Shearografie ausgeführt. Das Messen erfolgt dabei auf Grundlage einer thermisch verursachten Deformation, sodass der Vorteil erreicht wird, dass in die Fügepartner keine mechanische Spannung eingeleitet werden muss, um eine Deformation wenigstens eines der Fügepartner zu erzeugen.

Die Fügeverbindung wird erfindungsgemäß vorzugsweise mittels einer Schweißverbindung hergestellt, diese kann aber auch mittels einer Clinchverbindung, mittels einer Nietverbindung und/oder mittels einer Schraubverbindung hergestellt werden, wobei auch Kombinationen aus den Verfahren denkbar sind. Überdies ist aber auch die Herstellung beispielsweise einer Klebeverbindung oder einer Lötverbindung denkbar, für die das erfindungsgemäße Verfahren angewendet werden kann. Im Vordergrund steht dabei das Fügen von zwei im Wesentlichen formfesten Bauteilen miteinander, die die Fügepartner bilden. Die Erfindung ist jedoch allgemein auf stoffschlüssige, kraftschlüssige und/oder formschlüssige Verbindungen gerichtet, wobei auch eine Kombination der Fügeverbindungen möglich ist.

Kerngedanke der Erfindung ist dabei die Ausnutzung einer thermisch verursachten Deformation, die insbesondere bei der Herstellung einer Schweißverbindung unter Erwärmung der Fügepartner entsteht, wobei Wärme auch durch sonstige Mittel in die Fügeverbindung bzw. in wenigstens einen der Fügepartner eingebracht werden kann. Die thermisch verursachte Deformation kann dabei ausreichend sein, um das Messen der Güte der Fügeverbindung unter Nutzung der Shearografie auszuführen. Die Güte der Fügeverbindung betrifft dabei beispielsweise eine Rissfreiheit oder Fehlstellenfreiheit in der Verbindungsstelle, die hinreichende Ausbildung beispielsweise einer Schweißverbindung oder die Verbindungsfestigkeit zwischen zwei Bauteilen, die mit Verbindungsmitteln hergestellt worden ist, also beispielsweise mit Schraubelementen oder mit Nietelementen. Insbesondere betrifft die Güte der Fügeverbindung auch die Abmaße etwa einer gebildeten Schweißstelle sowie die mechanischen Eigenschaften, beispielsweise die Festigkeit.
Bei fehlerfreien Fügeverbindungen kann im Vorfeld eine Deformation ermittelt werden, die nur bei einer Fügeverbindung mit entsprechender Güte, also einer fehlerfreien Fügeverbindung entsteht. Wird über die Shearografie eine Deformation gemessen, die von der vorbestimmten Deformation abweicht, die der fehlerfreien Fügeverbindung zugeordnet ist, so kann aus dieser Abweichung die Information abgeleitet werden, dass die Fügeverbindung fehlerbehaftet ist.

Der wesentliche Vorteil des erfindungsgemäßen Verfahrens liegt darin, dass das Messen der Verbindungsgüte der Fügeverbindung sehr schnell erfolgen kann, und insbesondere kann das Messen der Güte, insbesondere der Schweißgüte, begleitend zum eigentlichen Fügevorgang bzw. zum Schweißvorgang angewendet werden. Dadurch verkürzt sich die Prozesszeit bei mehreren in einer Abfolge hergestellten Fügeverbindungen nicht oder nicht wesentlich. Folglich eignet sich das erfindungsgemäße Verfahren zum Herstellen und Prüfen von Fügeverbindungen sehr gut für die Anwendung in einer Produktion. Eine : 100%-Prüfung der Fügeverbindungen kann damit umgesetzt werden.

Ein besonderer Vorteil des erfindungsgemäßen Verfahrens liegt darin, dass die mit der Shearografie vorgenommene Messung der thermisch verursachten Deformation der Fügepartner in zeitlicher Abfolge auf die Herstellung der Fügeverbindung während einer Abkühlphase nah dem Herstellen der Fügeverbindung ausgeführt wird. Die Abkühlphase beginnt unmittelbar nach der Beendigung beispielsweise der Schweißung, insbesondere wenn die Schweißelektroden beim Widerstands-Punktschweißen nicht mehr bestromt sind und die Schweißelektroden beispielsweise wieder auseinanderfahren.

Ein ganz wesentlicher Aspekt der Erfindung liegt darin, dass die Erwärmung der Fügepartner durch die Herstellung der Schweißverbindung selbst erzeugt wird, wenn die Fügeverbindung mittels einer Schweißverbindung hergestellt wird. Insbesondere dann, wenn die Schweißverbindung mittels eines Widerstands-Punktschweißens, eines Rührreib-(Punkt-) Schweißens oder eines Magnetimpulsschweißens erfolgt, wird in die Schweißstelle eine erhebliche Wärmemenge eingebracht, die prozessbedingt notwendig ist. Die gleichen Vorteile können bei der Herstellung einer Lötverbindung genutzt werden, die auch unter Einbringung einer Fügeprozesswärme ausgebildet wird.

Diese Wärme wird erfindungsgemäß zur Ausführung der Shearografie ausgenutzt, sodass das Messen der Güte der Schweißverbindung unmittelbar nach dem Herstellen der Schweißverbindung erfolgt, um die abklingende Wärme in der Fügeverbindung dazu zu nutzen, eine sich ergebende thermisch verursachte Deformation in wenigstens einem der Fügepartner mit der Shearografie zu erfassen. Insbesondere dann, wenn die durch den Schweißprozess erzeugte Wärme zur Ausführung der Shearografie ausgenutzt wird, entsteht ein besonderer Vorteil des erfindungsgemäßen Verfahrens in Bezug auf kurze Messzyklen und einen geringen zusätzlichen Anlagenaufwand.

Sollte die verfahrensbedingt erzeugte Wärme durch die Herstellung der Fügeverbindung selbst nicht ausreichen, um die Messung auf Grundlage der Shearografie auszuführen, ist es ein weiterer Aspekt der Erfindung, dass wenigstens ein Wärmeeinbringmittel bereitgestellt wird, mit dem die Erwärmung der Fügepartner in zeitlicher Abfolge vor dem Messen der thermisch verursachten Deformation der Fügepartner mit dem Prüfmittel erzeugt wird. Auch ist es denkbar, dass das Wärmeeinbringmittel gemeinsam mit dem Prüfmittel aktiviert wird, da es auch möglich ist, eine Aufheizkurve und die zugehörige Deformation für eine Shearografie zu nutzen.

Beispielsweise wird das Wärmeeinbringmittel in Form wenigstens eines Induktionsheizmittels bereitgestellt. Mit einem Induktionsheizmittel wird auf vorteilhafter Weise die Wärme direkt im Material der Fügepartner erzeugt, sodass kein Wärmeübergang über die Oberfläche der Fügepartner notwendig ist. Folgerichtig kann mit der Erwärmung auch eine Deformation in wenigstens einem der Fügepartner erzeugt werden, die eine brauchbare Grundlage für die Ausführung der Shearografie bildet. Dabei kann ein Wärmeeinbringmittel einem Fügepartner zugeordnet sein, sodass entweder ein oder zwei Wärmeeinbringmittel bereitgestellt werden. Es besteht damit die Möglichkeit, entweder nur einen Fügepartner zu erwärmen, wenn beispielsweise auch nur an einer Seite der hergestellten Fügeverbindung zwischen den beiden Fügepartnern ein Prüfmittel angeordnet wird. Ist auf jeder Seite der Fügeverbindung jeweils ein Prüfmittel angeordnet, so kann auch auf jeder Seite der Fügeverbindung jeweils ein Wärmeeinbringmittel angeordnet werden, beispielsweise jeweils ein Induktionsheizmittel.

Das Wärmeeinbringmittel, insbesondere in der Form des Induktionsheizmittels, kommt insbesondere bei dem erfindungsgemäßen Verfahren unter Herstellung und Prüfung einer Clinchverbindung, einer Nietverbindung und/oder einer Schraubverbindung zum Einsatz, da bei diesen Verbindungsarten prozessbedingt keine Wärme in die Fügepartner eingebracht wird. Grundsätzlich besteht für jeden denkbaren Werkstoff die Möglichkeit, das erfindungsgemäße Verfahren auszuführen, wobei unter Verwendung eines Induktionsheizmittels wenigstens eines der zu fügenden Bauteile metallisch ist. Insofern besteht die Möglichkeit, auch eine Fügeverbindung zwischen einem metallischen mit einem nichtmetallischen Bauteil herzustellen, beispielsweise einem Kunststoff oder einem Verbundwerkstoff, insbesondere einem CFK-Werkstoff.

Die Herstellung der Fügeverbindung wird beispielsweise mit einer Fügevorrichtung hergestellt, und die Fügevorrichtung kann beispielsweise eine Schweißzange, eine Clinchzange, eine Nietzange oder ein Verschraubungswerkzeug umfassen, wobei derartige Zangen und Werkzeuge in an sich bekannter Weise für Fügeverfahren Verwendung findet. Erfindungsgemäß kann nach dem Anordnen der Fügepartner das Fügemittel und/oder das Wärmeeinbringmittel gemeinsam mit der Fügevorrichtung an die Stelle der zu erzeugenden Fügeverbindung herangeführt werden. Auf gleiche Weise kann nach dem Herstellen der Fügeverbindung das Prüfmittel und/oder das Wärmeeinbringmittel gemeinsam mit der Fügevorrichtung von der Stelle der zu erzeugenden Fügeverbindung wieder entfernt werden. Das Prüfmittel und/oder das Wärmeeinbringmittel ist dabei beispielsweise Bestandteil der Fügevorrichtung, gemeinsam mit dem eigentlichen Fügemittel der Fügevorrichtung, also beispielsweise den Schweißelektroden.

Die Erfindung richtet sich weiterhin auf eine Fügevorrichtung zum Herstellen und Prüfen einer Fügeverbindung zwischen einem ersten Fügepartner und wenigstens einem zweiten Fügepartner, aufweisend ein Prüfmittel, mit dem unter Nutzung einer Shearografie die hergestellte Fügeverbindung überprüfbar ist. Erfindungsgemäß ist das Prüfmittel dazu ausgebildet, mittels einer Shearografie eine thermisch verursachte Deformation der Fügepartner zu messen. Hierzu ist das Prüfmittel in der Empfindlichkeit, in der Dimensionierung und in der Anordnung so ausgebildet, dass thermisch verursachte Deformationen während oder nach dem Fügevorgang gemessen werden können, und mittels der Shearografie kann durch das Prüfmittel ein Signal bereitgestellt werden, dass dazu geeignet ist, die Güte einer Fügeverbindung zu bewerten, wie vorstehend in Zusammenhang mit dem erfindungsgemäßen Verfahren bereits beschrieben.

Gemäß der Erfindung weist die Fügevorrichtung wenigstens ein Wärmeeinbringmittel auf, mit dem die Fügepartner in zeitlicher Abfolge vor dem Messen der thermisch verursachten Deformation der Fügepartner erwärmbar sind. Alternativ kann die Messung mit dem Prüfmittel bereits auch während der Wärmeeinbringung durch das Wärmeeinbringmittel erfolgen. Die Wärme, die mit dem Wärmeeinbringmittel in wenigstens einen der Fügepartner eingebracht wird, kann eine zusätzliche Wärme betreffen, die alternativ oder ergänzend zur eingebrachten Wärme durch den Fügeprozess eingebracht wird. Insbesondere bei der Herstellung von Fügeverbindungen mit zusätzlichen Fügeelementen, beispielsweise Nieten oder Schrauben, wird das Wärmeeinbringmittel genutzt. Bei thermischen Fügeverfahren wie das Schweißen oder Löten kann die thermisch verursachte Deformation ausschließlich oder wenigstens überwiegend auf Basis der Wärme erfolgen, die prozessbedingt entsteht, aber es ist auch denkbar, mit dem Wärmeeinbringmittel weitere Wärme einzubringen, insbesondere dann, wenn das Schweißverfahren oder Lötverfahren keine oder nur eine sehr geringe Wärme in den Fügepartnern verursacht, beispielsweise beim Laserstrahlschweißen. Bei Fügeverfahren mittels Clinchen, Nieten oder Schrauben dient das Wärmeeinbringmittel als die einzige Wärmequelle zur Erzeugung der notwendigen Wärme.
Die Fügevorrichtung weist erfindungsgemäß ein Fügemittel auf, wobei das Fügemittel, das Prüfmittel und das Wärmeeinbringmittel gemäß der Erfindung eine bauliche
Einheit bilden, die einheitlich bewegbar oder handhabbar ist. Beispielsweise betrifft das Schweißmittel wenigstens eine Schweißelektrode, beispielsweise zwei Schweißelektroden, und wobei das Wärmeeinbringmittel ein Induktionsheizmittel aufweist, sodass die Fügepartner mittels Schweißelektroden insbesondere im WiderstandsSchweißverfahren schweißbar sind und mit den Induktionsheizmitteln erwärmbar sind.

Beispielsweise ist das Induktionsheizmittel so ausgeführt und angeordnet, dass dieses das Schweißwerkzeug, das Clinchwerkzeug, das Nietwerkzeug oder das Schraubwerkzeug ringförmig umschließt. Die Schweißelektroden beispielsweise können auf an sich bekannte Weise an einer Schweißzange aufgenommen sein, und erfindungsgemäß sind das Prüfmittel und/oder das Wärmeeinbringmittel ebenfalls an der Schweißzange aufgenommen. Damit lässt sich die Schweißvorrichtung mit der baulichen Einheit von Schweißmittel, Prüfmittel und Wärmeeinbringmittel in der Handhabung leicht bewegen, und das Prüfmittel und/oder das Wärmeeinbringmittel befinden sich unmittelbar am erforderlichen Ort zur Herstellung der Schweißverbindung.

Beispielsweise ist es für den Verfahrensablauf denkbar, dass mit einer Schweißzange, einer Clinchzange, einer Nietzange oder einem Schraubwerkzeug eine Fügestelle angefahren wird, und die Fügeverbindung wird durch eine Aktivierung der entsprechenden Zange bzw. des Werkzeugs, also etwa einem Zusammenfahren, mit den sich dazwischen befindenden Fügepartnern ausgeführt. Nach Beendigung der Herstellung der Fügeverbindung oder schon währenddessen wird mit dem Wärmeeinbringmittel wenigstens einer der Fügepartner aufgeheizt, und gleichzeitig oder anschließend wird mit dem Prüfmittel die Messung auf Basis der Shearografie ausgeführt. Hierzu kann es erforderlich sein, die Schließkraft zwischen den Zangen oder im Werkzeug wieder zurückgefahren wird, und die Zange oder das Werkzeug verbleibt für die Dauer der Shearografie-Messung noch am Ort der Fügestelle. Ist die Messung ausgeführt worden, insbesondere auch dokumentiert worden, so kann die nächstfolgende Fügestelle angefahren werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematisierte Ansicht von zwei Fügepartnern, wobei ein Prüfmittel zur Ausführung einer Shearografie-Messung über den Fügepartnern angeordnet ist,
- Fig. 2: eine Ansicht einer Fügeverbindung am Beispiel einer Schweißverbindung, die mittels eines Schweißwerkzeuges gebildet ist,
- Fig. 3: eine Ansicht einer Fügeverbindung am Beispiel einer Clinchverbindung, die mittels eines Clinchwerkzeuges gebildet ist,
- Fig. 4: eine Ansicht einer Fügeverbindung am Beispiel einer Nietverbindung, die mittels eines Nietwerkzeuges gebildet ist und
- Fig. 5: eine Ansicht einer Fügeverbindung am Beispiel einer Schraubverbindung, die mittels eines Schraubwerkzeuges gebildet ist.

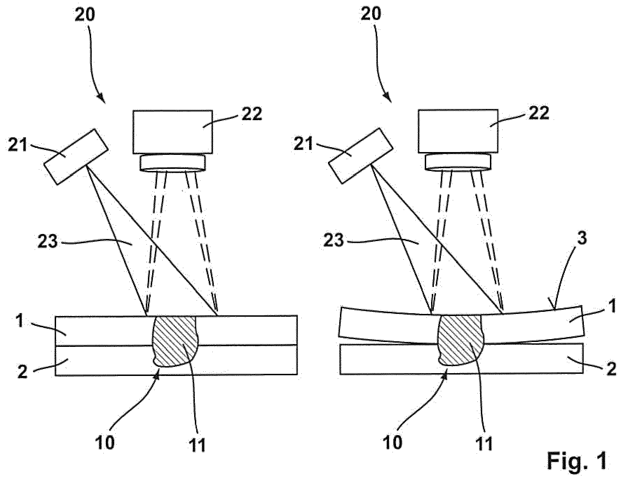

Figur 1 zeigt beispielhaft zwei Fügepartner 1 und 2 in einer linken Ansicht ohne eine thermisch verursachte Deformation und in einer rechten Ansicht mit einer thermisch verursachten Deformation 3. Die Deformation kann beispielsweise durch die Herstellung einer Fügeverbindung 10 beispielsweise mit einem Schweißverfahren und die damit einhergehende Wärme erzeugt worden sein.

Auf der Oberseite des Fügepartners 1 befindet sich beispielhaft gezeigt ein Prüfmittel 20, das eine Laserstrahlquelle 21 und einen Detektor 22 aufweist. Mit dem Prüfmittel 20 kann die sogenannte Shearografie ausgeführt werden, und die Shearografie bezeichnet ein Verfahren zur Messung von Oberflächenbewegungen von Bauteilen und setzt sich aus den Worten Laser Speckle Shearing Interferometrie zusammen. Die Shearografie bildet ein kohärent optisches Messverfahren auf Grundlage der Laser-Speckle-Technik. Mit der Laserstrahlquelle 21 wird kohärentes Licht 23 auf die Oberfläche beispielsweise des Fügepartners 1 aufgestrahlt, und Reflexionen werden mit dem Detektor 22 gemessen. Die Messung kann dabei von nur einer Seite oder von beiden Seiten erfolgen, sodass eine Deformation in beiden Fügepartnern 1 und 2 mit jeweiligen Prüfmitteln 20 gemessen wird.

Die Bestimmung der Güte einer Fügeverbindung 10 erfolgt dabei mit Vergleichswerten, denn es ist beispielsweise bekannt, wie sich die Deformation der Oberfläche des Fügepartners 1 verhalten muss, wenn beispielsweise die Schweißverbindung 11 keine Fehler aufweist und die Fügeverbindung 10 damit als fehlerfrei kategorisiert werden kann. Weicht jedoch aufgrund eines Risses beispielsweise in der Schweißverbindung 11 die Deformation 3 des Fügepartners 1 von der Soll-Deformation ab, so kann eine solche Abweichung mit dem Prüfmittel 20 ermittelt werden.

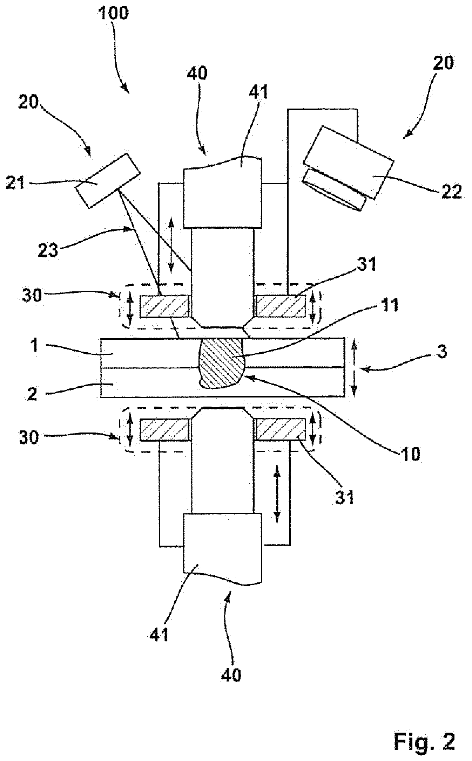

Figur 2 zeigt die Anordnung der beiden Fügepartner 1 und 2 mit einer hergestellten Fügeverbindung 10 zwischen den beiden Fügepartnern 1 und 2, dargestellt mit einer Schweißverbindung 11. Die Schweißverbindung 11 wird beispielsweise hergestellt durch ein Fügemittel 40, wobei das Ausführungsbeispiel ein Schweißwerkzeug 41 zeigt. Weiterhin weist die Fügevorrichtung 100 das Prüfmittel 20 mit der Laserstrahlquelle 21 zur Aussendung von kohärentem Licht 23 und mit dem Detektor 22 auf. Die nicht näher gezeigte Deformation 3 ist mit Pfeilen angedeutet und kann auf gleiche Weise stattfinden wie in Figur 1 dargestellt.

Zur Ausführung der Fügeverbindung 10 weist das Verfahren wenigstens die Schritte der Herstellung der Fügeverbindung 10 mit der Fügevorrichtung 100 unter Erwärmung der Fügepartner 1 und 2 auf, und anschließend erfolgt das Messen einer thermisch verursachten Deformation 3 der Fügepartner 1 und 2 mit dem Prüfmittel 20 unter Nutzung der Shearografie. Die Einbringung der Wärme kann dabei bereits durch den Schweißprozess erfolgen, indem eine Wärmemenge in die Schweißverbindung 11 eingebracht wird. Diese Wärmemenge führt zu einer im Wesentlichen bekannten Deformation 3 der Fügepartner 1 und/oder 2, und wird das Schweißwerkzeug 41 von den Fügepartnern 1 und 2 wieder entnommen, kann schon während der Schweißung oder unmittelbar im Anschluss mit dem Prüfmittel 20 die Shearografie ausgeführt werden.

Die Abbildung zeigt weiterhin ein Wärmeeinbringmittel 30, das am Schweißwerkzeug 41 angeordnet ist, wobei das Schweißwerkzeug 41 beispielsweise mittels Schweißelektroden gebildet wird. Die Wärmeeinbringmittel 30 umfassen Induktionsheizmittel 31, die bereits während des Schweißvorgangs oder unmittelbar im Anschluss an den Schweißvorgang eingeschaltet werden können. Durch das Induktionsheizmittel 31 wird der Vorteil erreicht, dass unmittelbar das Material der Fügepartner 1 und 2 selbst erhitzt werden kann, ohne eine Festkörperwärmeleitung zu benötigen, wodurch schließlich die gewünschte Deformation 3 erzeugt wird. Die Wärmeeinbringung durch die Induktionsheizmittel 31 kann dabei zusätzlich oder alternativ zur Erwärmung durch den Schweißvorgang erfolgen.

Ein besonderer Vorteil entsteht dadurch, dass die Induktionsheizmittel 31 direkt am Schweißwerkzeug 41 angebracht werden können, sodass die Wärmeeinbringmittel 30 gemeinsam mit dem Fügemittel 40 gehandhabt werden können. Die Handhabung erfolgt beispielsweise über eine Schweißzange, sodass die Wärmeeinbringmittel 30 ebenfalls an der Schweißzange angebracht sind. Auf gleiche vorteilhafte Weise kann auch das Prüfmittel 20 umfassend die Laserstrahlquelle 21 und den Detektor 22 an der Schweißzange angebracht sein, beispielsweise zum Widerstands-Punktschweißen.

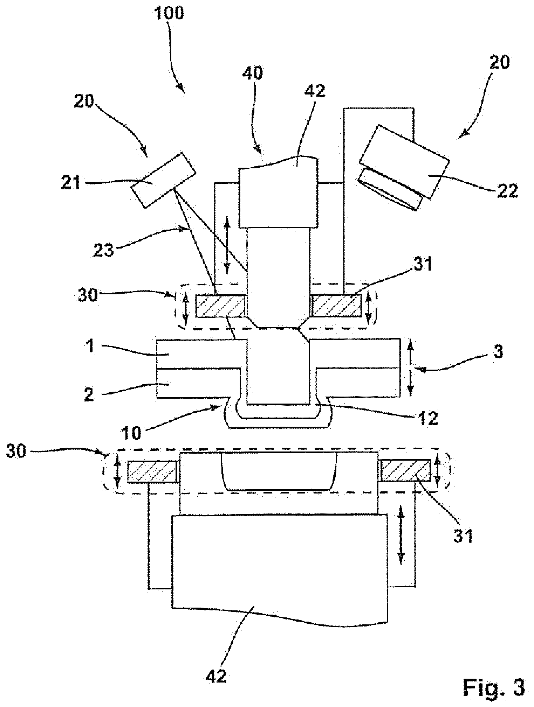

Figur 3 zeigt die Anordnung der beiden Fügepartner 1 und 2 mit einer hergestellten Fügeverbindung 10 zwischen den beiden Fügepartnern 1 und 2, dargestellt mit einer Clinchverbindung 12. Die Clinchverbindung 12 wird hergestellt durch ein Fügemittel 40, wobei das Ausführungsbeispiel ein Clinchwerkzeug 42 zeigt. Weiterhin weist die Fügevorrichtung 100 das Prüfmittel 20 mit der Laserstrahlquelle 21 zur Aussendung von kohärentem Licht 23 und mit dem Detektor 22 auf. Die nicht näher gezeigte Deformation 3 ist mit Pfeilen angedeutet und kann auf gleiche Weise stattfinden wie in Figur 1 dargestellt.

Verfahrensbedingt erzeugt die Ausführung des Clinchens mittels dem Clinchwerkzeug 42 keine hinreichende Wärme in der Fügeverbindung 10, sodass eine vorbestimmte Wärmemenge mittels des Wärmeeinbringmittels 30 in die Fügeverbindung 10 eingebracht werden kann. Das Wärmeeinbringmittel 30 wird gebildet durch ein Induktionsheizmittel 31, wobei das Ausführungsbeispiel auf jeder Seite der paarweisen Anordnung der Fügepartner 1, 2 ein Induktionsheizmittel 31 zeigt.

Zur Ausführung der Fügeverbindung 10 weist das Verfahren wenigstens die Schritte der Herstellung der Fügeverbindung 10 mit der Fügevorrichtung 100 unter Erwärmung der Fügepartner 1 und 2 auf, und anschließend erfolgt das Messen einer thermisch verursachten Deformation 3 der Fügepartner 1 und 2 mit dem Prüfmittel 20 unter Nutzung der Shearografie. Die Einbringung der Wärme erfolgt dabei mittels der Wärmeeinbringmittel 30. Diese Wärmemenge führt zu einer im Wesentlichen bekannten Deformation 3 der Fügepartner 1 und/oder 2, und wird das Clinchwerkzeug 42 von den Fügepartnern 1 und 2 wieder entnommen, kann schon während des Fügens oder unmittelbar im Anschluss mit dem Prüfmittel 20 die Shearografie ausgeführt werden.

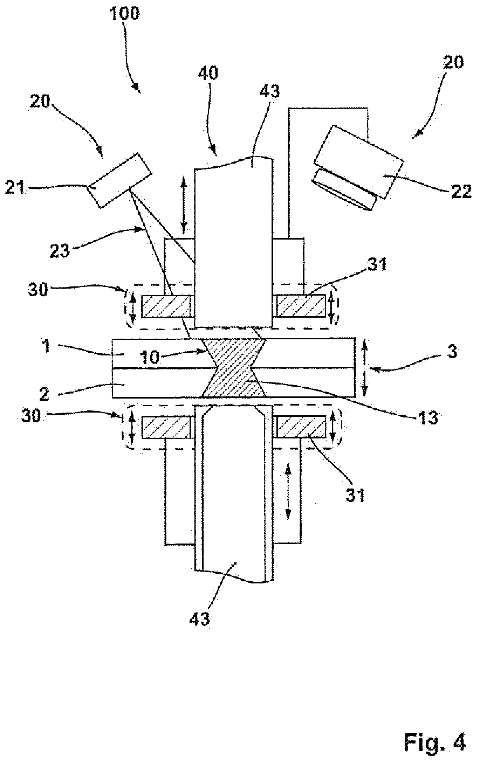

Figur 4 zeigt wiederholend zu den Ansichten der Figuren 2 und 3 die Anordnung der beiden Fügepartner 1 und 2 mit einer hergestellten Fügeverbindung 10 zwischen den beiden Fügepartnern 1 und 2, nunmehr dargestellt am Beispiel der Nietverbindung 13. Die Nietverbindung 13 wird hergestellt durch ein Fügemittel 40, wobei das Ausführungsbeispiel ein Nietwerkzeug 43 zeigt. Weiterhin weist die Fügevorrichtung 100 das Prüfmittel 20 mit der Laserstrahlquelle 21 zur Aussendung von kohärentem Licht 23 und mit dem Detektor 22 auf. Die nicht näher gezeigte Deformation 3 ist mit Pfeilen angedeutet und kann auf gleiche Weise stattfinden wie in Figur 1 dargestellt.

Verfahrensbedingt erzeugt auch die Ausführung des Nietens mittels dem Nietwerkzeug 43 keine hinreichende Wärme in der Fügeverbindung 10, sodass eine vorbestimmte Wärmemenge mittels des Wärmeeinbringmittels 30 in die Fügeverbindung 10 eingebracht werden kann. Das Wärmeeinbringmittel 30 wird gebildet durch ein Induktionsheizmittel 31, wobei das Ausführungsbeispiel auf jeder Seite der paarweisen Anordnung der Fügepartner 1, 2 ein Induktionsheizmittel 31 zeigt.

Zur Ausführung der Fügeverbindung 10 weist das Verfahren wenigstens die Schritte der Herstellung der Fügeverbindung 10 mit der Fügevorrichtung 100 unter Erwärmung der Fügepartner 1 und 2 auf, und anschließend erfolgt das Messen einer thermisch verursachten Deformation 3 der Fügepartner 1 und 2 mit dem Prüfmittel 20 unter Nutzung der Shearografie. Die Einbringung der Wärme erfolgt dabei mittels der Wärmeeinbringmittel 30. Diese Wärmemenge führt zu einer im Wesentlichen bekannten Deformation 3 der Fügepartner 1 und/oder 2, und wird das Nietwerkzeug 43 von den Fügepartnern 1 und 2 wieder entnommen, kann schon während des Fügens oder unmittelbar im Anschluss mit dem Prüfmittel 20 die Shearografie ausgeführt werden.

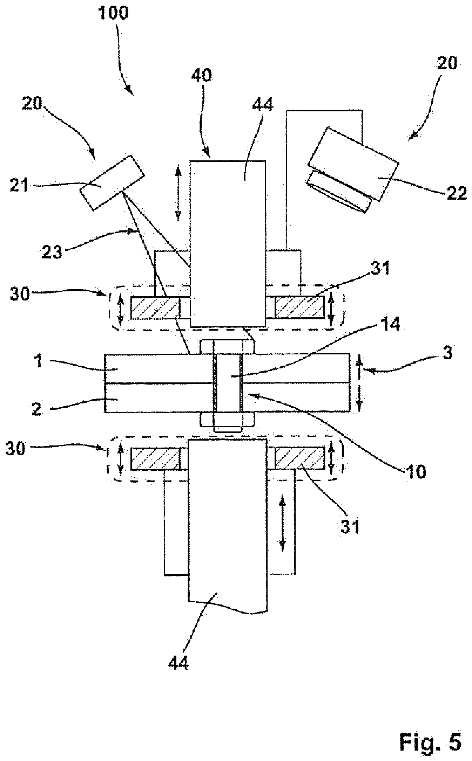

Figur 5 zeigt wiederholend zu den Ansichten der Figuren 2 bis 4 die Anordnung der beiden Fügepartner 1 und 2 mit einer hergestellten Fügeverbindung 10 zwischen den beiden Fügepartnern 1 und 2, nunmehr dargestellt am Beispiel der Schraubverbindung 14. Die Schraubverbindung 14 wird hergestellt durch ein Fügemittel 40, wobei das Ausführungsbeispiel ein Schraubwerkzeug 44 zeigt. Weiterhin weist die Fügevorrichtung 100 das Prüfmittel 20 mit der Laserstrahlquelle 21 zur Aussendung von kohärentem Licht 23 und mit dem Detektor 22 auf. Die nicht näher gezeigte Deformation 3 ist mit Pfeilen angedeutet und kann auf gleiche Weise stattfinden wie in Figur 1 dargestellt.

Verfahrensbedingt erzeugt auch die Ausführung des Verschraubens mittels dem Schraubwerkzeug 44 keine hinreichende Wärme in der Fügeverbindung 10, sodass eine vorbestimmte Wärmemenge mittels des Wärmeeinbringmittels 30 in die Fügeverbindung 10 eingebracht werden kann. Das Wärmeeinbringmittel 30 wird gebildet durch ein Induktionsheizmittel 31, wobei das Ausführungsbeispiel auf jeder Seite der paarweisen Anordnung der Fügepartner 1, 2 ein Induktionsheizmittel 31 zeigt.

Zur Ausführung der Fügeverbindung 10 weist das Verfahren wenigstens die Schritte der Herstellung der Fügeverbindung 10 mit der Fügevorrichtung 100 unter Erwärmung der Fügepartner 1 und 2 auf, und anschließend erfolgt das Messen einer thermisch verursachten Deformation 3 der Fügepartner 1 und 2 mit dem Prüfmittel 20 unter Nutzung der Shearografie. Die Einbringung der Wärme erfolgt dabei mittels der Wärmeeinbringmittel 30. Diese Wärmemenge führt zu einer im Wesentlichen bekannten Deformation 3 der Fügepartner 1 und/oder 2, und wird das Schraubwerkzeug 44 von den Fügepartnern 1 und 2 wieder entnommen, kann schon während des Fügens oder unmittelbar im Anschluss mit dem Prüfmittel 20 die Shearografie ausgeführt werden.

## Patentansprüche

1. Fügevorrichtung (100) zum Herstellen und Prüfen einer Fügeverbindung (10) zwischen einem ersten Fügepartner (1) und wenigstens einem zweiten Fügepartner (2), aufweisend
- ein Fügemittel (40),
- ein Prüfmittel (20), mit dem unter Nutzung einer Shearografie die hergestellte Fügeverbindung (10) überprüfbar ist, wobei das Prüfmittel (20) dazu ausgebildet ist, mittels einer Shearografie eine thermisch verursachte Deformation (3) der Fügepartner (1, 2) zu messen, und **gekennzeichnet durch** :
- wenigstens ein Wärmeeinbringmittel (30), mit dem die Fügepartner (1, 2) in zeitlicher Abfolge vor oder während dem Messen der thermisch verursachten Deformation (3) der Fügepartner (1, 2) erwärmbar sind,
wobei das Fügemittel (40), das Prüfmittel (20) und das Wärmeeinbringmittel (30) eine bauliche Einheit bilden, die einheitlich bewegbar und/oder handhabbar ist.

2. Fügevorrichtung (100) nach Anspruch 1,
**dadurch gekennzeichnet,**
**dass** das Fügemittel (40) wenigstens ein Schweißwerkzeug (41), ein Clinchwerkzeug (42), ein Nietwerkzeug (43) und/oder ein Schraubwerkzeug (44) aufweist, sodass die Fügepartner (1, 2) mittels eines Verschweißens, eines Verclinchens, eines Vernietens bzw. eines Verschraubens miteinander fügbar sind.

3. Fügevorrichtung (100) nach Anspruch 2,
**dadurch gekennzeichnet,**
**dass** die Fügevorrichtung (100) eine Schweißzange umfasst.

4. Fügevorrichtung (100) nach einem der vorgenannten Ansprüche,
**dadurch gekennzeichnet,**
**dass** das Wärmeeinbringmittel (30) ein Induktionsheizmittel (31) aufweist, sodass die Fügepartner (1, 2) mit dem Fügemittel (40) fügbar sind und wenigstens ein Fügepartner (1, 2) mit dem Induktionsheizmittel (31) erwärmbar ist.

5. Fügevorrichtung (100) nach einem der vorgenannten Ansprüche,
**dadurch gekennzeichnet,**
**dass** das Induktionsheizmittel (31) das Schweißwerkzeug (41), das Clinchwerkzeug (42), das Nietwerkzeug (43) und/oder das Schraubwerkzeug (44) ringförmig umschließend angeordnet ist.

6. Verfahren zum Herstellen und Prüfen einer Fügeverbindung (10) zwischen einem ersten Fügepartner (1) und wenigstens einem zweiten Fügepartner (2), wobei die Fügeverbindung (10) mit einer Fügevorrichtung (100) gemäß einem der vorgenannten Ansprüche hergestellt wird, wobei das Verfahren wenigstens die folgenden Schritte aufweist:
- Herstellen der Fügeverbindung (10) mit der Fügevorrichtung (100) unter Erwärmung der Fügepartner (1, 2) und
- Messen einer thermisch verursachten Deformation (3) der Fügepartner (1, 2) mit dem Prüfmittel (20) unter Nutzung der Shearografie.

7. Verfahren nach Anspruch 6,
**dadurch gekennzeichnet,**
**dass** die Fügeverbindung (10) mittels einer Schweißverbindung (11), mittels einer Clinchverbindung (12), mittels einer Nietverbindung (13) und/oder mittels einer Schraubverbindung (14) hergestellt wird.

8. Verfahren nach Anspruch 7,
**dadurch gekennzeichnet,**
**dass** bei einer Herstellung der Fügeverbindung (10) mittels der Schweißverbindung (11) die Erwärmung der Fügepartner (1, 2) durch die Herstellung der Schweißverbindung (11) selbst erzeugt wird.

9. Verfahren nach einem der Ansprüche 6 bis 8,
**dadurch gekennzeichnet,**
**dass** mit dem Wärmeeinbringmittel (30) die Erwärmung wenigstens eines der Fügepartner (1, 2) in zeitlicher Abfolge vor oder während dem Messen der thermisch verursachten Deformation (3) der Fügepartner (1, 2) mit dem Prüfmittel (20) erzeugt wird.

10. Verfahren nach Anspruch 9,
**dadurch gekennzeichnet,**
**dass** als Wärmeeinbringmittel (30) wenigstens ein Induktionsheizmittel (31) oder ein Laserstrahlwerkzeug bereitgestellt wird.

11. Verfahren nach Anspruch 9 oder 10,
**dadurch gekennzeichnet,**
**dass** nach dem Anordnen der Fügepartner (1, 2) das Prüfmittel (20) und/oder das Wärmeeinbringmittel (30) gemeinsam mit der Fügevorrichtung (100) an die Stelle der zu erzeugenden Fügeverbindung (10) herangeführt werden.

12. Verfahren nach einem der Ansprüche 9 bis 11,
**dadurch gekennzeichnet,**
**dass** nach dem Herstellen der Fügeverbindung (10) das Prüfmittel (20) und/oder das Wärmeeinbringmittel (30) gemeinsam mit der Fügevorrichtung (100) von der Stelle der zu erzeugenden Fügeverbindung (10) entfernt werden.

## Claims

1. A joining device (100) for producing and testing a joined connection (10) between a first joining partner (1) and at least one second joining partner (2), comprising
- a joining agent (40),
- a testing means (20) with which the produced joined connection (10) can be checked using shearography, the testing means (20) being designed to measure a thermally caused deformation (3) of the joining partners (1, 2) by means of shearography, and **characterized by** :
- at least one heat input means (30) with which the joining partners (1, 2) can be heated in time sequence before or during the measurement of the thermally caused deformation (3) of the joining partners (1, 2),
wherein the joining means (40), the testing means (20) and the heat input means (30) form a structural unit which is uniformly movable and/or handleable.

2. The joining device (100) according to claim 1,
**characterized in that**
the joining means (40) comprises at least one welding tool (41), a clinching tool (42), a riveting tool (43) and/or a screwing tool (44), so that the joining partners (1, 2) can be joined together by means of welding, clinching, riveting or screwing.

3. The joining device (100) according to claim 2,
**characterized in that**
the joining device (100) includes welding pliers.

4. The joining device (100) according to one of the aforementioned claims,
**characterized in that**
the heat input means (30) has an induction heating means (31) so that the joining partners (1, 2) can be joined with the joining means (40) and at least one joining partner (1, 2) can be heated with the induction heating means (31).

5. The joining device (100) according to one of the aforementioned claims,
**characterized in that**
the induction heating means (31), the welding tool (41), the clinching tool (42), the riveting tool (43) and/or the screwing tool (44) are arranged in an annularly surrounding manner.

6. A method for producing and testing a joined connection (10) between a first joining partner (1) and at least one second joining partner (2), wherein the joined connection (10) is produced with a joining device (100) according to one of the aforementioned claims, the method comprising at least the following steps:
- producing the joined connection (10) with the joining device (100) while heating the joining partners (1, 2) and
- measuring a thermally caused deformation (3) of the joining partners (1 , 2) with the testing means (20) using shearography.

7. The method according to claim 6,
**characterized in that**
the joined connection (10) is produced by means of a welded connection (11), by means of a clinched connection (12), by means of a riveted connection (13) and/or by means of a screw connection (14).

8. The method according to claim 7,
**characterized in that**
when producing the joined connection (10) by means of the welded connection (11), the heating of the joining partners (1, 2) is produced by the production of the welded connection (11) itself.

9. The method according to one of the claims 6 to 8,
**characterized in that**
the heating of at least one of the joining partners (1, 2) is produced with the heat input means (30) in a time sequence before or during the measurement of the thermally caused deformation (3) of the joining partners (1, 2) with the testing means (20).

10. The method according to claim 9,
**characterized in that**
at least one induction heating means (31) or a laser beam tool is provided as heat input means (30).

11. The method according to claim 9 or 10,
**characterized in that**
after arranging the joining partners (1, 2), the testing means (20) and/or the heat input means (30) are brought together with the joining device (100) to the location of the joined joint (10) to be produced.

12. The method according to one of the claims 9 to 11,
**characterized in that**
after the production of the joined connection (10), the testing means (20) and/or the heat input means (30) are removed together with the joining device (100) from the location of the joined connection (10) to be produced.

## Revendications

1. Dispositif d'assemblage (100) pour réaliser et tester une liaison d'assemblage (10) entre un premier partenaire d'assemblage (1) et au moins un deuxième partenaire d'assemblage (2), comprenant
- un moyen d'assemblage (40),
- un moyen de test (20) avec lequel la liaison d'assemblage produite (10) peut être contrôlée par shearographie, le moyen de test (20) étant conçu pour mesurer une déformation thermique (3) des partenaires de liaison (1, 2) au moyen d'une shearographie, et **caractérisé par** :
- au moins un moyen d'application de chaleur (30) avec lequel les partenaires d'assemblage (1, 2) peuvent être chauffés en séquence temporelle avant ou pendant la mesure de la déformation thermique (3) des partenaires d'assemblage (1, 2),
où le moyen d'assemblage (40), le moyen de test (20) et le moyen d'application de chaleur (30) forment une unité structurelle qui est uniformément mobile et/ou manipulable.

2. Dispositif d'assemblage (100) selon la revendication 1,
**caractérisé en ce que**
le moyen d'assemblage (40) comprend au moins un outil de soudage (41), un outil de clinchage (42), un outil de rivetage (43) et/ou un outil de vissage (44), de sorte que les partenaires d'assemblage (1, 2) peuvent être assemblés par soudage, clinchage, rivetage ou vissage.

3. Dispositif d'assemblage (100) selon la revendication 2,
**caractérisé en ce que**
le dispositif d'assemblage (100) comprend une pince à souder.

4. Dispositif d'assemblage (100) selon l'une des revendications précédentes,
**caractérisé en ce que**
le moyen d'application de chaleur (30) comporte un moyen de chauffage par induction (31), de sorte que les partenaires d'assemblage (1, 2) peuvent être assemblés avec le moyen d'assemblage (40) et au moins un partenaire d'assemblage (1, 2) peut être chauffé avec le moyen de chauffage par induction (31).

5. Dispositif d'assemblage (100) selon l'une des revendications précédentes,
**caractérisé en ce que**
le moyen de chauffage par induction (31) est disposé de manière à entourer l'outil de soudage (41), l'outil de clinchage (42), l'outil de rivetage (43) et/ou l'outil de vissage (44) de manière annulaire.

6. Procédé de production et de test d'une liaison d'assemblage (10) entre un premier partenaire d'assemblage (1) et au moins un deuxième partenaire d'assemblage (2), la liaison d'assemblage (10) étant produite avec un dispositif d'assemblage (100) selon l'une des revendications précédentes, le procédé comprenant au moins les étapes suivantes :
- la production de la liaison d'assemblage (10) avec le dispositif d'assemblage (100) en chauffant les partenaires d'assemblage (1, 2) et
- la mesure d'une déformation thermique (3) des partenaires d'assemblage (1, 2) avec le moyen de test (20) par shearographie.

7. Procédé selon la revendication 6,
**caractérisé en ce que**
la liaison d'assemblage (10) est réalisée au moyen d'un assemblage par soudage (11), au moyen d'un assemblage par clinchage (12), au moyen d'un assemblage par rivetage (13) et/ou au moyen d'un assemblage par vissage (14).

8. Procédé selon la revendication 7,
**caractérisé en ce que**
lors de la réalisation de la liaison d'assemblage (10) au moyen de l'assemblage par soudage (11), l'échauffement des partenaires de liaison (1, 2) est généré par la réalisation de l'assemblage par soudage (11) lui-même.

9. Procédé selon l'une des revendications 6 à 8,
**caractérisé en ce que**
l'échauffement d'au moins un des partenaires d'assemblage (1, 2) est généré avec le moyen d'application de chaleur (30) dans une séquence temporelle avant ou pendant la mesure de la déformation thermique (3) des partenaires d'assemblage (1, 2) avec le moyen de test (20).

10. Procédé selon la revendication 9,
**caractérisé en ce qu'**
au moins un moyen de chauffage par induction (31) ou un outil à faisceau laser est prévu comme moyen d'application de chaleur (30).

11. Procédé selon la revendication 9 ou 10,
**caractérisé en ce qu'**
après la disposition des partenaires d'assemblage (1, 2), le moyen de test (20) et/ou le moyen d'application de chaleur (30) sont amenés avec le dispositif d'assemblage (100) à l'emplacement de la liaison d'assemblage (10) à réaliser.

12. Procédé selon l'une des revendications 9 à 11,
**caractérisé en ce qu'**
après la réalisation de la liaison d'assemblage (10), le moyen de test (20) et/ou le moyen d'application de chaleur (30) sont retirés avec le dispositif d'assemblage (100) de l'emplacement de la liaison d'assemblage (10) à réaliser.
